# FASCICULE DE BREVET EUROPEEN

(11) **EP 0 755 834 B1**
(45) Date de publication et mention de la délivrance du brevet: **02.08.2000**
(21) Numéro de dépôt: 96401405.4
(22) Date de dépôt: 25.06.1996
(51) Int. Cl.: B60S 1/38

(54) **Balai d'essuie-glace muni de moyens perfectionnés de fixation d'un accessoire et essuie-glace muni d'un tel balai**
Scheibenwischerblatt mit Mittel zum Befestigen von Zubehör und Scheibenwischer mit einem solchen Blatt
Windscreen wiper blade with means for attaching an accessory, and wind screen wiper equipped with such a blade

(30) Priorité: 28.06.1995 FR 9507886
(43) Date de publication de la demande: 29.01.1997
(73) Titulaire: VALEO SYSTEMES D'ESSUYAGE, 78321 La Verrière (FR)
(72) Inventeur: Maubray, Daniel, 92130 Issy-les-Moulineaux (FR)
(74) Mandataire: Kohn, Philippe

(56) Documents cités:
- EP-A- 0 429 334
- FR-A- 2 648 771
- US-A- 5 392 489

## Description

L'invention concerne un balai d'essuie-glace pour véhicule automobile, du type comportant une structure articulée qui est déformable dans un plan longitudinal perpendiculaire à une vitre à essuyer et qui porte, au moyen d'une série de griffes, une raclette d'essuyage en matériau souple qui plaque la raclette contre la vitre de sorte que la raclette en épouse le galbe, du type dans lequel les griffes chevauchent un talon longitudinal de fixation de la raclette, du type dans lequel il est prévu au moins une vertèbre de rigidification de la raclette qui s'étend sensiblement sur la longueur du talon, du type dans lequel la raclette est immobilisée longitudinalement par rapport à la structure et du type comportant au moins un accessoire monté sur le balai.

Il est connu d'équiper le balai d'essuie-glace de divers accessoires tels qu'un déflecteur aérodynamique ou un dispositif de projection de produit de lavage sur la vitre à essuyer.

Ces accessoires sont généralement fixés sur un étrier principal de la structure articulée du balai par rivetage ou par emboîtement élastique. Ces modes de fixation permettent notamment de fixer des déflecteurs aérodynamiques de forte taille ou des rampes d'arrosage.

Un tel état de la technique est par exemple illustré par les documents FR-A-2.648.771 et EP-A-0.429.334.

Toutefois, il est souhaitable que ces accessoires puissent être placés le plus près possible de la vitre à essuyer, et notamment le plus près possible de la raclette d'essuyage.

Par exemple, le rôle d'un déflecteur aérodynamique étant de dévier les filets d'air qui seraient susceptibles de heurter la raclette d'essuyage et d'en entraver le bon fonctionnement, on a tout intérêt à disposer ce déflecteur au plus près de la raclette, à proximité de la vitre. A cet effet, il apparaît intéressant d'utiliser un déflecteur aérodynamique souple, agencé au plus près de la raclette d'essuyage et qui puisse en épouser les déformations.

C'est dans le but de proposer une solution au problème de la fixation d'un tel accessoire que l'invention propose un balai d'essuie-glace du type vu précédemment, caractérisé en ce que l'accessoire comporte au moins une patte de fixation sur le balai qui est interposée entre une tête, agencée en vis-à-vis d'une face supérieure du talon, d'une griffe et le talon de la raclette.

Selon des modes de réalisation de l'invention
- chaque patte de fixation comporte une languette longitudinale plane qui est interposée entre la griffe et une face supérieure du talon, et une traverse de liaison qui s'étend sensiblement perpendiculairement depuis la languette en direction de l'accessoire ;
- la languette longitudinale est reçue dans un évidement longitudinal pratiqué dans la face supérieure du talon ;
- la traverse de liaison est agencée dans un plan décalé par rapport au plan de la languette longitudinale de manière à chevaucher un bord longitudinal de l'évidement ;
- un bord longitudinal de l'évidement comporte au moins une entaille pour le passage d'une traverse de liaison ;
- une lame de glissement est interposée entre chaque languette longitudinale et la face supérieure du talon ;
- une lame de glissement est interposée entre chaque languette longitudinale et la griffe correspondante ;
- la lame de glissement est une lame continue qui s'étend sur toute la longueur de la raclette ;
- la lame de glissement constitue une vertèbre dorsale de rigidification de la raclette ;
- l'accessoire possède une série de pattes de fixation qui sont réalisées de sorte que les languettes forment une bande longitudinale continue de fixation qui s'étend contre la face supérieure du talon, qui est chevauchée par les griffes de fixation et qui est reliée à l'accessoire par une série de traverses de liaison ;
- la bande longitudinale continue de fixation de l'accessoire constitue une vertèbre dorsale de rigidification.

D'autres caractéristiques et avantages de l'invention apparaîtront à la lecture de la description détaillée qui suit pour la compréhension de laquelle on se reportera aux dessins annexés dans lesquels :
- la figure 1 est une vue partielle en perspective, avec arrachement, d'un premier mode de réalisation de l'invention ;
- les figures 2, 3 et 4 sont des vues similaires à celle de la figure 1 représentant chacune une variante de réalisation d'un balai d'essuie-glace selon l'invention.

Sur les figures, des composants identiques ou similaires sont désignés par les mêmes chiffres de référence.

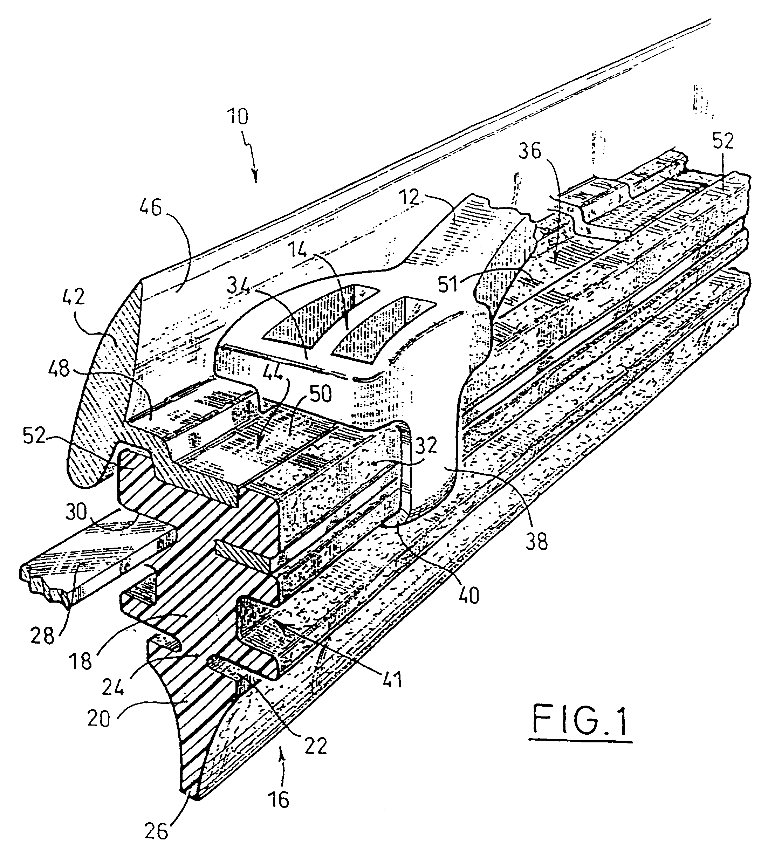

Le balai d'essuie-glace 10 qui est représenté sur la figure 1 comporte une structure articulée (non représentée) qui est formée de manière connue d'un étrier principal, à chacune des extrémités duquel sont articulés des étriers secondaires qui, éventuellement, portent eux-mêmes d'autres étriers secondaires.

Chacune des extrémités 12 des composants de la structure articulée comporte une griffe 14 de fixation d'une raclette d'essuyage 16.

La structure articulée est déformable dans un plan longitudinal sensiblement perpendiculaire au plan de la vitre à essuyer et, sous l'effet de la pression imposée par un bras d'essuie-glace (non représenté) qui porte le balai d'essuie-glace, elle plaque la raclette 16 contre la vitre de manière que la raclette 16 en épouse le galbe.

La raclette 16 comporte un talon supérieur longitudinal de fixation 18 dont la forme en section transversale est sensiblement rectangulaire et une lame d'essuyage 20 sensiblement en forme de pointe de flèche.

La lame d'essuyage 20 est reliée par sa base 22 au talon 18 grâce à une fine bande longitudinale de matière 24 formant charnière tandis que sa pointe 26 est destinée à frotter contre la vitre à essuyer.

De manière connue, la raclette 16 est munie de deux vertèbres longitudinales de rigidification 28 de section rectangulaire qui sont reçues dans des rainures 30 correspondantes aménagées respectivement dans chacune des deux faces latérales 32 du talon 18.

Chaque griffe 14 présente, en section transversale, une forme de U renversé qui chevauche le talon 18.

Selon une conception classique, la griffe 14 comporte une tête 34 agencée en vis-à-vis d'une face supérieure 36 du talon 18. Des jambes 38 s'étendent en direction de la vitre depuis la tête supérieure 34 de la griffe 14, le long des faces latérales 32 du talon 18, et leurs extrémités libres 40 sont recourbées transversalement vers l'intérieur, en vis-à-vis l'une de l'autre, et sont reçues chacune dans une gorge longitudinale 41 agencée dans les faces latérales 32 du talon 18, en dessous des rainures 30 des vertèbres de rigidification 28.

Les griffes 14 permettent ainsi de maintenir le talon 18 de la raclette 16 et permettent également d'éviter que les vertèbres latérales de rigidification 28 ne s'échappent transversalement de leur rainure 30.

Il est par ailleurs prévu des moyens connus (non représentés) qui permettent d'empêcher tout déplacement longitudinal des vertèbres 28 par rapport au talon 18 et d'immobiliser la raclette 16 par rapport à la structure articulée, ou tout au moins de limiter l'amplitude de ses déplacements.

Généralement, il est prévu des moyens d'immobilisation longitudinale au niveau d'une griffe 14 de la structure articulée, les autres griffes 14 étant montées coulissantes longitudinalement sur la raclette 16.

Conformément aux enseignements de l'invention, le balai d'essuie-glace 10 représenté sur la figure 1 comporte un déflecteur aérodynamique 42 qui est réalisé en matériau souple et qui est monté sur la raclette d'essuyage 16.

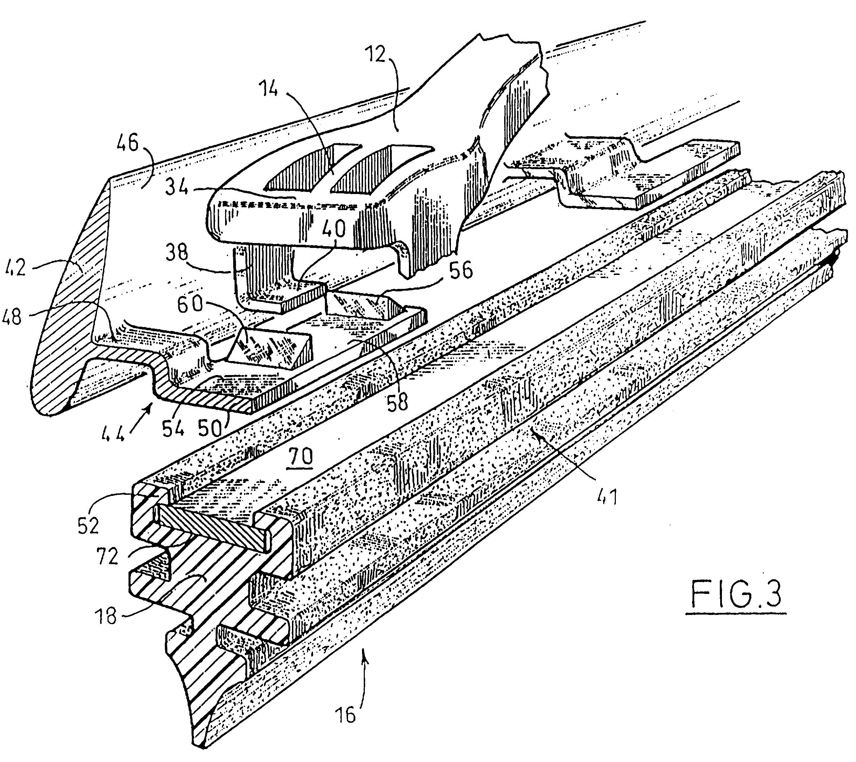

Comme on peut le voir plus particulièrement sur la figure 3, le déflecteur 42 est muni pour sa fixation sur le balai d'une série de pattes de fixation 44 qui s'étendent sensiblement transversalement depuis une face latérale 46 du déflecteur qui est en regard de la raclette 16.

Chaque patte 44 comporte une traverse 48 qui s'étend depuis le déflecteur 42 et qui comporte à son extrémité libre une languette 50 longitudinale destinée à reposer contre la face supérieure 36 du talon 18.

La languette 50 est plus particulièrement destinée à être interposée entre la face supérieure 36 du talon 18 et la tête 34 de la griffe 14.

Selon le premier mode de réalisation représenté à la figure 1, la face supérieure 36 du talon 18 est munie d'un évidement longitudinal 51 dans lequel est reçue la languette 50 de chacune des pattes 44.

Ainsi, il est possible d'utiliser un tel mode de fixation du déflecteur aérodynamique 42 sans modifier le dessin et la conception des griffes 14 tout en diminuant la hauteur globale de l'ensemble et limiter de ce fait la résistance au flux d'air.

Toutefois, cette conception implique de prévoir que les traverses 48 sont agencées dans un plan décalé verticalement vers le haut par rapport au plan des languettes 50 de manière à ne pas écraser les bords latéraux 52 de l'évidement 51 formé dans la face supérieure 36 du talon 18.

Pour le montage du déflecteur 42 sur le balai 10, il est possible de procéder de deux manières.

Une première manière consiste à monter la raclette d'essuyage 16 munie de ses vertèbres 28 de manière connue. Ensuite, les languettes 50 de chacune des pattes 44 du déflecteur 42 sont introduites dans l'évidement longitudinal 51 de la face supérieure 36 du talon 18 en dehors des griffes 14. Enfin, le déflecteur 42 et ses pattes 44 sont déplacées longitudinalement de manière à engager chaque languette 50 sous la griffe 14 correspondante.

La languette 50 est alors emprisonnée entre l'évidement 51 et la tête de griffe 14, ce qui permet la fixation du déflecteur 42.

On peut prévoir d'immobiliser longitudinalement le déflecteur 42 en disposant sur la face supérieure 54 de la languette 50 d'une des pattes 44 de fixation, deux ergots 56 qui délimitent longitudinalement un logement 58 dans lequel la tête 34 de la griffe 14 est reçue en position montée du déflecteur 42.

De ce fait, l'un des ergots 56 est engagé en force sous la griffe 14 au cours du montage et il est prévu que l'ergot 56 possède un plan incliné 60 pour faciliter cet engagement à force.

Selon une seconde manière, on peut assembler le balai d'essuie-glace 10 en inversant l'ordre de montage, c'est-à-dire en disposant d'abord la languette 50 de chacune des pattes de fixation 44 du déflecteur 42 entre les jambes 38 des griffes 14 pour ensuite monter la raclette d'essuyage 16 selon une méthode connue, par coulissement longitudinal entre les griffes 14, ou par sertissage transversal des griffes 14 dans leurs gorges 41.

Dans ce dernier cas, on peut prévoir de munir un bord 52 de l'évidement 51 d'entailles qui permettent d'aménager les traverses 48 des pattes 44 dans le même plan que celui des languettes 50 sans imposer une déformation de ce bord 52.

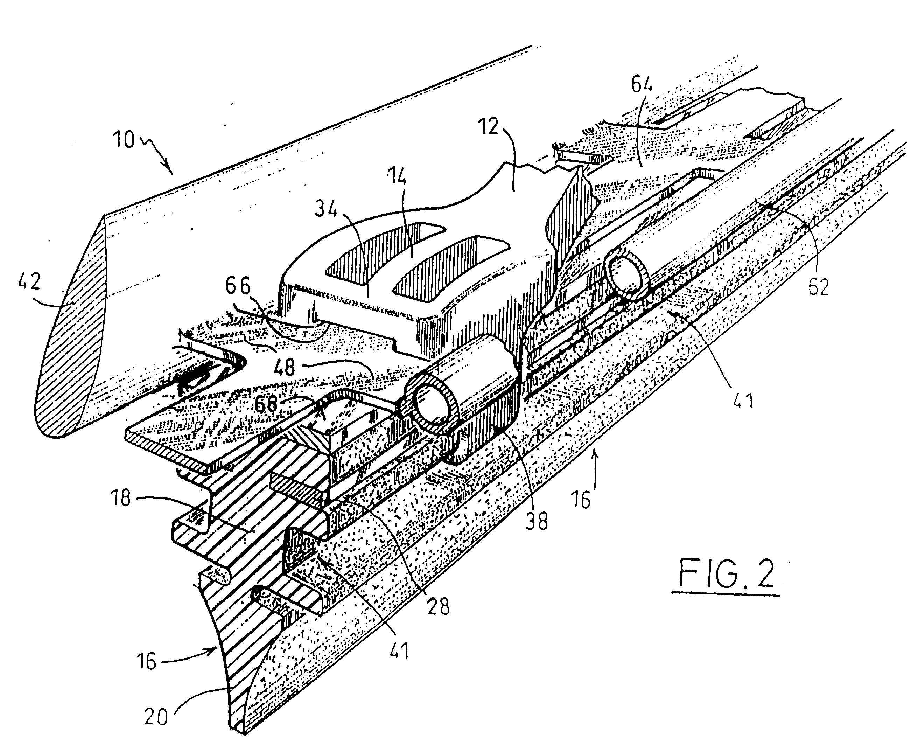

On a représenté sur la figure 2 un second mode de réalisation de l'invention.

Dans ce mode de réalisation, on a choisi de disposer de part et d'autre de la raclette d'essuyage 16 deux accessoires, c'est-à-dire un déflecteur aérodynamique 42 et une rampe d'arrosage 62 réalisés simultanément et montés sur la raclette 16 par des pattes 44 communes.

Une deuxième particularité de ce mode de réalisation est que les pattes de fixation 44 des accessoires comportent une bande longitudinale commune 64 qui assure la même fonction que les languettes 50 des pattes de fixation vues précédemment.

On retrouve des traverses 48 qui permettent de relier la bande longitudinale de fixation 64 à chacun des accessoires 42, 62.

Comme on peut le voir sur la figure 2, la bande 64 n'est pas reçue dans un évidement pratiqué dans la face supérieure 36 la raclette 16 mais elle est immobilisée transversalement par les griffes 14 dont les têtes 34 sont munies à cet effet d'un décrochement 66 dans lequel la bande longitudinale est reçue.

Enfin, dans ce deuxième mode de réalisation, une lame de glissement 68 est interposée entre la face supérieure 46 du talon 18 et la bande longitudinale 64 de fixation des accessoires 42, 62.

Ainsi, lorsque la lame se déforme en épousant le galbe de la vitre à essuyer, la bande de fixation 64 est libre de coulisser à la fois par rapport à la raclette 16 et par rapport aux griffes 14 sans qu'il n'apparaissent de frottements trop importants susceptibles d'entraver l'adaptation de la raclette 16 au galbe de la vitre.

On a représenté sur la figure 3 un troisième mode de réalisation de l'invention qui diffère du premier notamment en ce que les deux vertèbres latérales 28 qui étaient agencées dans les flancs latéraux du talon 18 sont ici remplacées par une vertèbre dorsale unique 70 qui est reçue dans un évidement 72 de la face supérieure 36 du talon 18. Les vertèbres de rigidification étant généralement réalisées en métal, cette disposition permet d'éviter d'interposer une lame de glissement comme dans le deuxième mode de réalisation, tout en conservant une bonne capacité de glissement entre les griffes 14, les pattes 44 de fixation des accessoires 62 et la raclette 16.

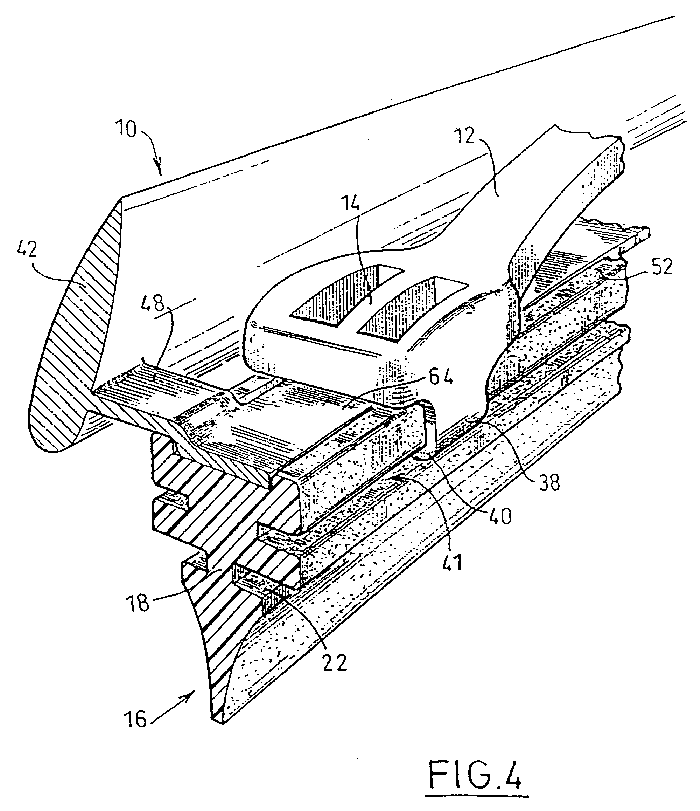

Enfin, on a représenté sur la figure 4 un quatrième mode de réalisation de l'invention dans lequel l'accessoire est fixé, comme dans le deuxième mode de réalisation, par une bande longitudinale de fixation.

Toutefois, dans ce mode de réalisation, la bande longitudinale 64 est dimensionnée de sorte qu'elle suffise à la rigidification à la raclette 16, en remplacement des vertèbres de rigidification.

Afin de rigidifier transversalement la raclette 16, il est nécessaire que la bande 64 soit reçue dans un évidement longitudinal 51 agencé dans la face supérieure 36 du talon 16 afin que les rebords 52 de cet évidement 51 prennent appui transversalement sur la bande longitudinale 64 faisant office de vertèbre de rigidification.

Ce mode de réalisation de l'invention est particulièrement avantageux en ce qu'il permet de réaliser en une seule pièce venue de matière à la fois la fixation de l'accessoire et la rigidification de la raclette tout en diminuant la hauteur de la raclette 16 du fait de la suppression des vertèbres et des logements les recevant.

On obtient ainsi une raclette de balai d'essuie-glace de hauteur particulièrement réduite.

## Revendications

1. Balai d'essuie-glace pour véhicule automobile, du type comportant une structure articulée qui est déformable dans un plan longitudinal perpendiculaire à une vitre à essuyer et qui porte, au moyen d'une série de griffes (14), une raclette (16) d'essuyage en matériau souple, qu'elle plaque contre la vitre de sorte que la raclette (16) en épouse le galbe, du type dans lequel les griffes (14) chevauchent un talon (18) longitudinal de fixation de la raclette (16), du type dans lequel il est prévu au moins une vertèbre (28) de rigidification de la raclette (16) qui s'étend sensiblement sur la longueur du talon (18), du type dans lequel la raclette (16) est immobilisée longitudinalement par rapport à la structure, et du type comportant au moins un accessoire (42) monté sur le balai (10), caractérisé en ce que l'accessoire (42) comporte au moins une patte de fixation (44) sur le balai (10) qui est interposée entre une tête (34), agencée en vis-à-vis d'une face supérieure (36) du talon (18), d'une griffe (14) et le talon (18) de la raclette (16).

2. Balai d'essuie-glace selon la revendication 1, caractérisé en ce que chaque patte de fixation (44) comporte une languette longitudinale (50) plane qui est interposée entre une face supérieure (36) du talon (18), et une traverse de liaison (48) qui s'étend sensiblement perpendiculairement depuis la languette (50) en direction de l'accessoire (42).

3. Balai d'essuie-glace selon la revendication 2, caractérisé en ce que la languette longitudinale (50) est reçue dans un évidement longitudinal (51) pratiqué dans la face supérieure (36) du talon (18).

4. Balai d'essuie-glace selon la revendication 3, caractérisé en ce que la traverse de liaison (48) est agencée dans un plan décalé par rapport au plan de la languette (50) longitudinale de manière à chevaucher un bord longitudinal (52) de l'évidement (51).

5. Balai d'essuie-glace selon la revendication 3, caractérisé en ce qu'un bord (52) longitudinal de l'évidement (51) comporte au moins une entaille pour le passage d'une traverse de liaison (48).

6. Balai d'essuie-glace selon l'une quelconque des revendications 3 à 5, caractérisé en ce qu'une lame de glissement (68) est interposée entre chaque languette longitudinale (50) et la face supérieure (36) du talon (18).

7. Balai d'essuie-glace selon l'une quelconque des revendications 3 à 6, caractérisé en ce qu'une lame de glissement (68) est interposée entre chaque languette longitudinale (50) et la griffe (14) correspondante.

8. Balai d'essuie-glace selon l'une des revendications 6 ou 7, caractérisé en ce que la lame de glissement (68) est une lame continue qui s'étend sur toute la longueur de la raclette (16).

9. Balai d'essuie-glace selon la revendication 8, caractérisé en ce que la lame de glissement (68) constitue une vertèbre dorsale de rigidification de la raclette (16).

10. Balai d'essuie-glace selon l'une quelconque des revendications 2 à 9, caractérisé en ce que l'accessoire possède une série de pattes de fixation (44) qui sont réalisées de sorte que les languettes forment une bande longitudinale continue de fixation (64) qui s'étend contre la face supérieure (36) du talon (18), qui est chevauchée par les griffes (14) de fixation et qui est reliée à l'accessoire par une série de traverses de liaison (48).

11. Balai d'essuie-glace selon la revendication 10, caractérisé en ce que la bande longitudinale continue de fixation (64) de l'accessoire constitue une vertèbre dorsale de rigidification.

12. Balai d'essuie-glace selon l'une quelconque des revendications précédentes, caractérisé en ce qu'il comporte des moyens complémentaires (56, 58) de limitation du déplacement longitudinal d'au moins une patte de fixation (44) par rapport à la structure articulée.

13. Balai d'essuie-glace selon l'une des revendications 2 à 12, caractérisé en ce qu'il comporte deux accessoires (42, 62) agencés en vis à vis de part et d'autre de la raclette (16) et qui sont fixés par une languette longitudinale commune (50) munie de deux traverses de liaison (48) opposées qui s'étendent perpendiculairement depuis la languette (50) en direction de chacun des accessoires (42, 62).

14. Balai d'essuie-glace selon l'une quelconque des revendications précédentes, caractérisé en ce que les pattes de fixation (44) sont réalisées venues de matière avec l'accessoire (42, 62).

15. Balai d'essuie-glace selon l'une quelconque des revendications précédentes, caractérisé en ce que l'accessoire est un déflecteur aérodynamique souple (42) qui s'étend le long de la raclette (16).

16. Balai d'essuie-glace selon l'une quelconque des revendications 1 à 14, caractérisé en ce que l'accessoire est une rampe d'arrosage (62) qui s'étend le long de la raclette (16).

17. Essuie-glace de véhicule automobile muni d'un balai d'essuie-glace réalisé conformément à l'une quelconque des revendications précédentes.

## Patentansprüche

1. Scheibenwischerblatt für Kraftfahrzeuge, umfassend eine Gelenkstruktur, die in einer Längsebene senkrecht zu einer zu wischenden Scheibe verformbar ist und die mittels einer Reihe von Krallen (14) einen Wischergummi (16) aus biegsamem Material trägt, den sie gegen die Scheibe drückt, so daß sich der Wischergummi (16) an deren Wölbung anpaßt, wobei die Krallen (14) einen Längssteg (18) zur Befestigung des Wischergummis (16) umgreifen, wobei wenigstens eine Versteifungsleiste (28) zur Versteifung des Wischergummis (16) vorgesehen ist, die sich in etwa auf der Länge des Stegs (18) erstreckt, wobei der Wischergummi (16) in Längsrichtung im Verhältnis zur Gelenkstruktur gesichert ist und wobei das Wischerblatt (10) wenigstens ein daran angebrachtes Zubehörteil (42) umfaßt, **dadurch gekennzeichnet,** daß das Zubehörteil (42) wenigstens einen Befestigungsansatz (44) zur Befestigung am Wischerblatt (10) umfaßt, der zwischen einem gegenüber einer Oberseite (36) des Stegs (18) angeordneten Kopfstück (34) einer Kralle (14) und dem Steg (18) des Wischergummis (16) eingefügt ist.

2. Scheibenwischerblatt nach Anspruch 1, **dadurch gekennzeichnet,** daß jeder Befestigungsansatz (44) eine ebene Längszunge (50) umfaßt, die zwischen einer Oberseite (36) des Stegs (18) und einem Verbindungsquerstück (48) eingefügt ist, das sich von der Zunge (50) aus in etwa senkrecht in Richtung des Zubehörteils (42) erstreckt.

3. Scheibenwischerblatt nach Anspruch 2, **dadurch gekennzeichnet,** daß die Längszunge (50) in einer Längsaussparung (51) aufgenommen ist, die in die Oberseite (36) des Stegs (18) eingearbeitet ist.

4. Scheibenwischerblatt nach Anspruch 3, **dadurch gekennzeichnet,** daß das Verbindungsquerstück (48) in einer Ebene angeordnet ist, die im Verhältnis zur Ebene der Längszunge (50) versetzt ist, um eine Längskante (52) der Aussparung (51) zu umgreifen.

5. Scheibenwischerblatt nach Anspruch 3, **dadurch gekennzeichnet,** daß eine Längskante (52) der Aussparung (51) wenigstens einen Einschnitt für den Durchgang eines Verbindungsquerstücks (48) enthält.

6. Scheibenwischerblatt nach einem der Ansprüche 3 bis 5, **dadurch gekennzeichnet,** daß zwischen jeder Längszunge (50) und der Oberseite (36) des Stegs (18) eine Gleitlamelle (68) eingefügt ist.

7. Scheibenwischerblatt nach einem der Ansprüche 3 bis 6, **dadurch gekennzeichnet,** daß zwischen jeder Längszunge (50) und der entsprechenden Kralle (14) ist eine Gleitlamelle (68) eingefügt ist.

8. Scheibenwischerblatt nach einem der Ansprüche 6 oder 7, **dadurch gekennzeichnet,** daß die Gleitlamelle (68) eine durchgehende Lamelle ist, die sich auf der ganzen Länge des Wischergummis (16) erstreckt.

9. Scheibenwischerblatt nach Anspruch 8, **dadurch gekennzeichnet,** daß die Gleitlamelle (68) eine rückseitige Versteifungsleiste des Wischergummis (16) bildet.

10. Scheibenwischerblatt nach einem der Ansprüche 2 bis 9, **dadurch gekennzeichnet,** daß das Zubehörteil eine Reihe von Befestigungsansätzen (44) besitzt, die so ausgeführt sind, daß die Zungen einen durchgehenden Befestigungslängsstreifen (64) bilden, der sich gegen die Oberseite (36) des Stegs (18) erstreckt, die von den Befestigungskrallen (14) umgriffen wird und die mit dem Zubehörteil durch eine Reihe von Verbindungsquerstücken (48) verbunden ist.

11. Scheibenwischerblatt nach Anspruch 10, **dadurch gekennzeichnet,** daß der durchgehende Befestigungslängsstreifen (64) des Zubehörteils eine rückseitige Versteifungsleiste bildet.

12. Scheibenwischerblatt nach einem der vorangehenden Ansprüche, **dadurch gekennzeichnet,** daß er formschlüssige Mittel (56, 58) zur Begrenzung der Längsverschiebung wenigstens eines Befestigungsansatzes (44) im Verhältnis zur Gelenkstruktur umfaßt.

13. Scheibenwischerblatt nach einem der Ansprüche 2 bis 12, **dadurch gekennzeichnet,** daß es zwei Zubehörteile (42, 62) umfaßt, die gegenüberliegend beiderseits des Wischergummis (16)) angeordnet und durch eine gemeinsame Längszunge (50) befestigt sind, die mit zwei gegenüberliegenden Verbindungsquerstücken (48) versehen sind, die sich von der Zunge (50) aus senkrecht in Richtung jedes der Zubehörteile (42, 62) erstrecken.

14. Scheibenwischerblatt nach einem der vorangehenden Ansprüche, **dadurch gekennzeichnet,** daß die Befestigungsansätze (44) einstückig mit dem Zubehörteil (42, 62) ausgeführt sind.

15. Scheibenwischerblatt nach einem der vorangehenden Ansprüche, **dadurch gekennzeichnet,** daß das Zubehörteil ein biegsamer aerodynamischer Windabweiser (42) ist, der sich entlang dem Wischergummi (16) erstreckt.

16. Scheibenwischerblatt nach einem der Ansprüche 1 bis 14, **dadurch gekennzeichnet,** daß das Zubehörteil eine Sprühleiste (62) ist, die sich entlang dem Wischergummi (16) erstreckt.

17. Kraftfahrzeug-Scheibenwischer mit einem Scheibenwischerblatt, das nach einem der vorangehenden Ansprüche ausgeführt ist.

## Claims

1. A screen wiper blade for a motor vehicle, of the type comprising an articulated structure which is deformable in a longitudinal plane at right angles to a glass to be swept, and which carries, by means of a set of grippers (14), a wiping strip of flexible material which it lays against the glass so that the wiping strip (16) hugs the curve thereof, of the type in which the grippers (14) straddle a longitudinal fastening claw (18) of the wiping strip (16), of the type in which, for stiffening the wiping strip (16), at least one vertebra (28) is provided which extends substantially over the length of the claw (18), of the type in which the wiping strip (16) is retained longitudinally with respect to the structure, and of the type which includes at least one accessory (42) mounted on the blade (10), characterised in that the accessory (42) includes, for fastening it on the blade (10), at least one fastening lug (44) which is interposed between a head (34) of a gripper (14), arranged in facing relationship with an upper face (36) of the claw (18), and the claw (18) of the wiping strip (16).

2. A screen wiper blade according to Claim 1, characterised in that each fastening lug (44) comprises a flat longitudinal tongue (50) which is interposed between an upper face (36) of the claw (18), and a transverse connecting element (48) which extends substantially at right angles from the tongue (50) towards the accessory (42).

3. A screen wiper blade according to Claim 2, characterised in that the longitudinal tongue (15) is received in a longitudinal aperture (51) formed in the upper face (36) of the claw (18).

4. A screen wiper blade according to Claim 3, characterised in that the transverse connecting element (48) is disposed in a plane which is offset with respect to the plane of the longitudinal tongue (50), so as to straddle a longitudinal edge (52) of the aperture (51).

5. A screen wiper blade according to Claim 3, characterised in that a longitudinal edge (52) of the aperture (51) has at least one notch for the passage of a transverse connecting element (48).

6. A screen wiper blade according to any one of Claims 3 to 5, characterised in that a slide strip (68) is interposed between each longitudinal tongue (50) and the upper face (36) of the claw (18).

7. A screen wiper blade according to any one of Claims 3 to 6, characterised in that a slide strip (68) is interposed between each longitudinal tongue (50) and the corresponding gripper (14).

8. A screen wiper blade according to Claim 6 or Claim 7, characterised in that the slide strip (68) is a continuous strip which extends over the whole length of the wiping strip (16).

9. A screen wiper blade according to Claim 8, characterised in that the slide strip (68) constitutes a dorsal stiffening vertebra for the wiping strip (16).

10. A screen wiper blade according to any one of Claims 2 to 9, characterised in that the accessory has a set of fastening lugs (44) which are arranged so that the tongues define a continuous longitudinal fastening band (64) lying against the upper face (36) of the claw (18) which is straddled by the fastening grippers (14), the band being joined to the accessory through a set of transverse connecting elements (48).

11. A screen wiper blade according to Claim 10, characterised in that the continuous longitudinal fastening band (64) of the accessory constitutes the dorsal stiffening vertebra.

12. A screen wiper blade according to any one of the preceding Claims, characterised in that it includes complementary means (56, 58) for limiting longitudinal displacement of at least one fastening lug (44) with respect to the articulated structure.

13. A screen wiper blade according to one of Claims 2 to 12, characterised in that it includes two accessories (42, 62) which are arranged facing each other on either side of the wiping strip (16), and which are secured by means of a common longitudinal tongue (50) having two transverse connecting elements (48) opposed to each other and extending at right angles from the tongue (50) towards each of the accessories (42, 62).

14. A screen wiper blade according to any one of the preceding Claims, characterised in that the fastening lugs (44) are formed integrally with the accessory (42, 62).

15. A screen wiper blade according to any one of the preceding Claims, characterised in that the accessory is a flexible aerodynamic deflector which extends along the wiping strip (16).

16. A screen wiper blade according to any one of Claims 1 to 14, characterised in that the accessory is a sprinkler bar (62) which extends along the wiping strip (16).

17. A motor vehicle screen wiper having a screen wiper blade made in accordance with any one of the preceding Claims.
